Europäisches Patentamt

(19) European Patent Office

Office européen des brevets

(11) **EP 0 563 407 B1**

(12) **EUROPEAN PATENT SPECIFICATION**

(45) Date of publication and mention
of the grant of the patent:
**12.06.1996 Bulletin 1996/24**

(21) Application number: **93908770.6**

(22) Date of filing: **12.10.1992**

(51) Int. Cl.$^6$: **B23Q 15/00**, B23Q 35/12,
G05B 19/402, B21D 37/20,
G05B 19/42, G05B 19/41

(86) International application number:
**PCT/JP92/01329**

(87) International publication number:
**WO 93/07991 (29.04.1993 Gazette 1993/11)**

(54) **DIGITIZING CONTROLLER**

STEUERGERÄT ZUM DIGITALISIEREN

CONTROLEUR DE NUMERISATION

(84) Designated Contracting States:
**DE GB IT**

(30) Priority: **16.10.1991 JP 267681/91**

(43) Date of publication of application:
**06.10.1993 Bulletin 1993/40**

(73) Proprietor: **FANUC LTD.**
**Minamitsuru-gun, Yamanashi 401-05 (JP)**

(72) Inventors:
• **MATSUURA, Hitoshi,**
**Keio Yamada Mansion 2-202**
**Hachioji-shi, Tokyo 193 (JP)**

• **TSUKAMOTO, Osamu,**
**Fanuc Mansion Harimomi 6-105**
**Minamitsuru-gun, Yamanashi 401-05 (JP)**

(74) Representative: **Brunner, Michael John et al**
**GILL JENNINGS & EVERY**
**Broadgate House**
**7 Eldon Street**
**London EC2M 7LH (GB)**

(56) References cited:
EP-A- 0 428 739          JP-A- 1 191 012
JP-A- 3 060 956          JP-A- 3 121 754
JP-A-63 099 154

**Description**

TECHNICAL FIELD

The present invention relates to a digitizing control apparatus for outputting digitizing data of a model configuration from a measuring displacement of a sensor tracing a three-dimensional model surface, and more specifically, to a digitizing control apparatus by which digitizing data obtained from trace measuring points deviated from an original path can be corrected.

BACKGROUND ART

Conventionally, when digitizing data is output by tracing a three-dimensional model surface, a straight line or the like set on the model surface is commanded as a tracing path and data is fetched at preset intervals while moving a sensor. When the model surface is not abruptly changed with respect to a direction in which the sensor is moved, the sensor fetches distance data from the measuring points on the model surface located substantially along the tracing path, but at a position where an inclination of the model is abruptly changed, the apparent measurement origin set to the sensor may bite into the model surface or leave therefrom.

As a result, a non-contact type optical sensor, for example, outputs measuring points deviated from a tracing point to a model. Therefore, a value obtained by adding the displacements of a measuring point to an actual position of a sensor at the time of measurement is output as digitizing data.

When, however, a trace machining is actually executed based on digitizing data output based on trace measuring points deviated from an original tracing path, a tool is finely oscillated with respect to a workpiece not only vertically but also horizontally about an initially set tracing path, which abruptly affects a machine tool for controlling a position of the tool. Further, a problem arises in that since the tool is controlled zigzag, the machining surface of the workpiece cannot be smoothly finished.

EP-A-0428739 discloses a digitizing controller with non-contact optical sensing. JP-A-1191012 discloses a method for correcting errors in three dimensional position measurements.

Taking the above into consideration, an object of the present invention is to provide a digitizing control apparatus which outputs smooth data along an original tracing path by correcting digitizing data.

To attain the above object, according to the present invention, there is provided a digitizing control apparatus for outputting digitized data of a model shape from displacement measured from a reference point by a sensor following a tracing path and tracing the three-dimensional model surface, comprising:

calculation means for calculating coordinate data of a digitized model surface by adding coordinate data commanding the tracing path on said model surface to the measured displacements at trace measuring points of said sensor; and characterised by:

correction means for correcting the coordinate data of said respective trace measuring points to digitizing data approximated by a new coordinate point on the tracing plane containing said tracing path, said correction means using a point where a vector connecting the center of gravity of said trace measuring point and the measuring points located in front of and behind said measuring point to said trace measuring point intersects the tracing plane containing said tracing path as a new coordinate point.

A moving command is applied to the sensor from the digitizing control apparatus so that measuring displacements in accordance with a model configuration is output. The measuring displacements of the sensor are added to the coordinate data of the commanded tracing path to calculate the coordinate data of the trace measuring points on a model, and further the coordinate data of the respective trace measuring points is corrected to digitizing data approximated by the new coordinate points on a plane containing the tracing path of the sensor.

In the drawings:-

Figure 1 is a diagram showing the schematic arrangement of a digitizing control apparatus according to the present invention;

Figure 2 is a block diagram showing the arrangement of the digitizing control apparatus and peripheral unit according to the present invention;

Figure 3 is a schematic diagram of a distance sensor constituting a tracer head;

Figure 4 is a diagram showing an angle between a tracing path and the position of a machine (coordinate of the machine);

Figure 5 is a schematic diagram showing a method of correcting digitizing data; and

Figure 6 is a flowchart for executing an automatic measuring point correcting calculation processing in a digitizing control apparatus.

BEST MODE OF CARRYING OUT THE INVENTION

An embodiment of the present invention will be described below with reference to the drawings.

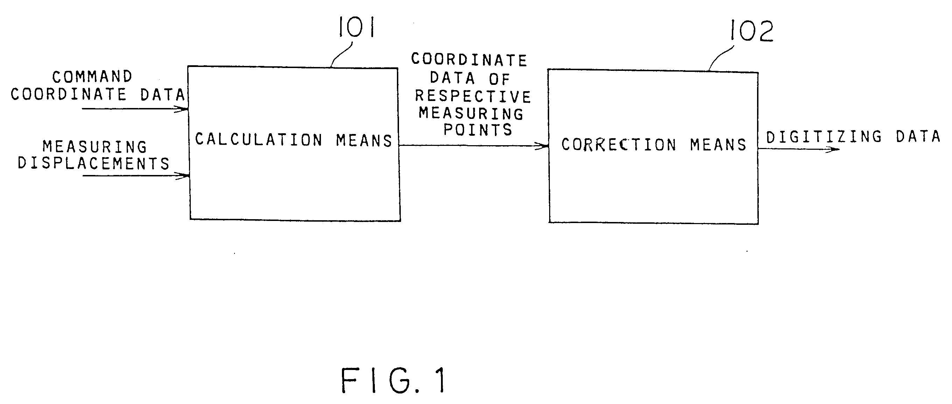

Figure 1 is a diagram showing the schematic arrangement of a digitizing control apparatus according to the present invention.

A calculation means 101 adds command coordinate data for commanding a tracing path onto a model surface to the measuring displacements at trace measuring points of a sensor and calculates coordinated data of a digitized model surface.

Further, a correction means 102 corrects coordinate data at a plurality of trace measuring points calculated by the calculation means 101 to digitizing data approximated by the new coordinate points on a tracing place including a tracing path and outputs the same.

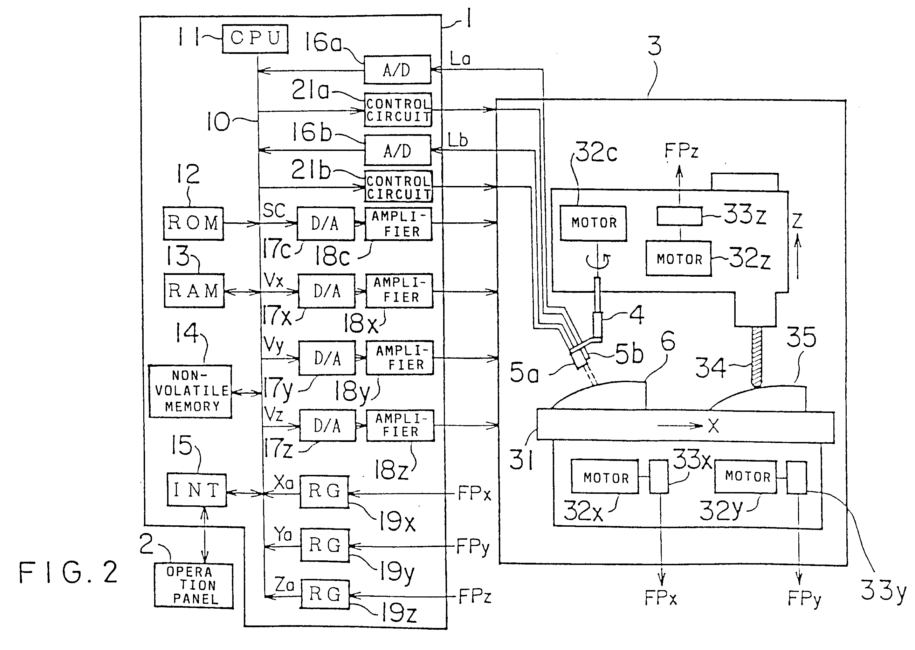

Figure 2 is a block diagram showing the arrangement of the digitizing control apparatus and peripheral unit according to the present invention, wherein a processor (CPU) 11 controls the entire operation of a digitizing control apparatus 1. A ROM 12 composed of an EPROM or EEPROM stores a system program for controlling the digitizing control apparatus 1. Therefore, the processor 11 reads out the system program stored in the ROM 12 through a bus 10 and controls the operation of the digitizing control apparatus 1 in accordance with the system program.

A RAM 13 for temporarily storing various data stores temporary data such as measuring values from optical type distance sensors 5a and 5b to be described later, and the like. A non-volatile memory 14 supplied with power from a not shown battery stores various parameters such as a tracing direction, tracing speed and the like input through an interface 15 from an operation panel 2.

A tracing machine tool 3 has a tracer head 4 provided with the optical type distance sensors 5a and 5b disposed in proximity to each other. Each of the optical type distance sensors 5a and 5b is composed of a reflected light amount type sensor with a light source composed of a semiconductor laser or light emitting diode and measures a distance up to a model 6 as a displacement from a reference distance set thereto without coming into contact with the model. Measuring values La and Lb measured by these distance sensors are converted into digital values by the A/D converters 16a and 16b in the digitizing control apparatus 1 and sequentially read by the processor 11.

The processor 11 calculates the displacements of respective axes based on the measuring values La and Lb and the signals from present position registers 19x, 19y and 19z to be described later as well as generates speed commands Vx, Vy and Vz to respective axes based on the displacements and a commanded tracing direction and speed by a known technology. These speed commands are converted into analog values by D/A converters 17x, 17y and 17z and input to servo amplifiers 18x, 18y and 18z. The servo amplifiers 18x and 18y drive the servo motors 32x and 32y of the tracing machine tool 3 based on these speed commands, by which a table 31 is moved in an X-axis direction and a Y-axis direction which is at right angles to the plane of the paper. Further, a servo amplifier 18z drives a servo motor 32z, by which the tracer head 4 and a tool 34 is moved in a Z-axis direction.

The servo motors 32x, 32y and 32z are provided with pulse coders 33x, 33y and 33z for generating sensing pulses FPx, FPy and FPz each time they rotate a predetermined amount. The present position registers 19x, 19y and 19z in the digitizing control apparatus 1 count up/down the sensing pulses FPx, FPy and FPz in accordance with the respective rotational directions, determine the present position data Xa, Ya and Za of the respective axial directions and input the same to the processor 11.

On the other hand, the processor 11 samples the measuring values La and Lb of the distance sensors 5a and 5b at each predetermined sampling time simultaneously with the control of the above respective axes, determines the normal vector of the surface of a model 6 by using the sampling data and generates a rotation command SC corresponding to the direction of the normal vector projected on an X - Y plane. The rotation command SC is converted into an analog value by a D/A converter 17c and then input to a servo amplifier 18c. The servo amplifier 18c drives the servo motor 32c of a V-axis based on the command.

With this arrangement, the tracer head 4 is controlled to be rotated in accordance with a command angle β as well as to keep a predetermined reference distance between the model 6 and it. Further, at the same time, the table 31 is moved in the tracing direction at the tracing speed and a workpiece 35 is machined to the same configuration as that of the model 6 by the tool 34 having a Z-axis controlled in the same way as the tracer head 4.

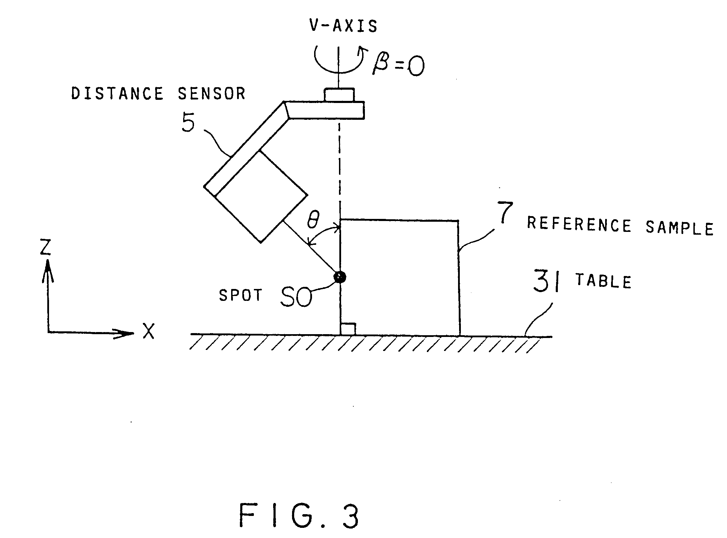

An automatic measuring point correction method of the digitizing control apparatus according to the present invention will be described below with reference to Figures 3, 4 and 5.

Figure 3 is a schematic diagram of the distance sensor 5 constituting the tracer head 4, wherein a spot formed by the distance sensor 5 is shown by a black dot. The distance sensors 5a and 5b are mounted to the tracer head 4 with an angle θ inclined with respect to a vertical axis (V-axis) in parallel with the Z-axis. Further, a reference sample 7 (e.g., a cube) placed on the table 31 is a body having at least one reference plane vertical to the table 31, and it is placed here on the table 31 so that the reference plane is perpendicular to the X-axis of the coordinate system set to the table 31. These distance sensors 5a and 5b are rotated about the V-axis along a circle having a predetermined radius at the angle β commanded by the rotation command SC. Figure 3 shows the state that the reference sample 7 is placed at the position spaced apart from the distance sensor 5 by a reference distance and a spot is formed at the zero point S0 of the reference sample 7.

Then, the distance sensor 5 emits a light and receives the light reflected from the spot to measure a distance between the sensor and the spot. Further, measured data is processed by the processor 11 and stored in the RAM 13 or the like as a measuring point Sn (Xn, Yn, Zn). Note, n represents an integer larger than 1.

Next, a method of correcting a coordinate value obtained at a predetermined position by moving the tracer head 4 along the model surface to digitizing data will be described.

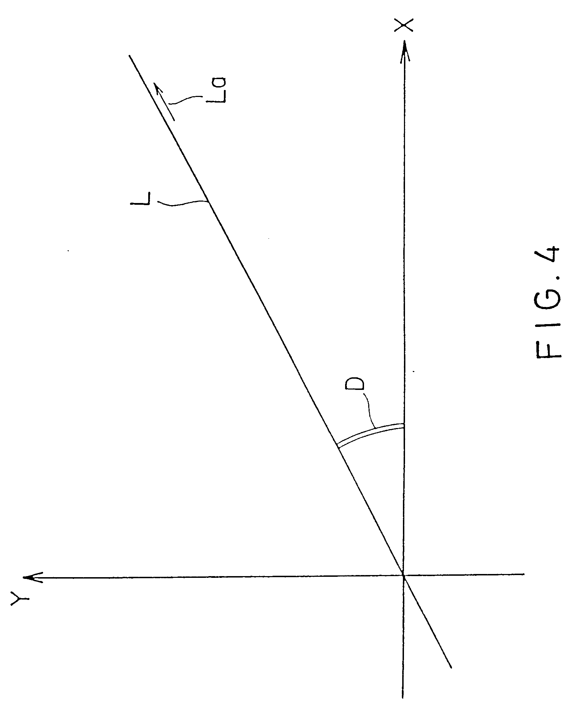

Figure 4 is a diagram showing an angle between a tracing path L for tracing the model surface and an X-axis in a plane of a machine coordinate (X - Y axis) plane for specifying a machine position. When the tracer head 4 moves in the direction of an arrow La along the tracing path L, an angle D is established between the X-axis and the path L in the plane of the machine coordinate.

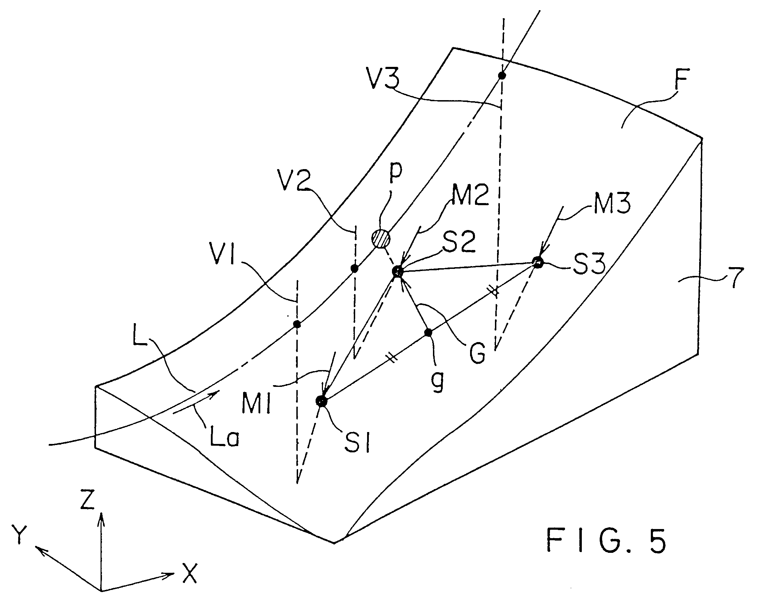

Figure 5 is a schematic diagram showing a method of correcting digitizing data in the model surface, wherein the tracing path L is a path along which the tracer head 4 moves on the model surface F in the direction of the arrow La. Axes V1, V2, V3 represent the V-axis as the center of rotation of the sensor shown in Figure 3.

Further, the emitting directions M1, M2, M3 from the distance sensor 5 are determined so that the point at which the tracer head 4 intersects the V-axis becomes the zero point of the distance sensor 5. Spots formed on the model surface F by a light emitted from the distance sensor 5 are assumed to be represented by measuring points S1 (X1, Y1, Z1), S2 (X2, Y2, Z2) and S3 (X3, Y3, Z3), respectively.

Here, the measuring point S1 is a point measured two times before, the measuring point S2 is a point measured the last time and the measuring point S3 is a point measured this time. Further, the machine position at the measuring point S2 is represented by m (Xm, Ym, Zm).

Further, the middle point between the measuring points S1 and S3 is represented by g, the vector passing through the middle point g and measuring point S2 is represented by G (Xv, Yv, Zv), and the intersecting point of the vector G and a tracing plane is represented by a correcting point P (X, Y, Z). Note, the tracing plane is a plane containing the tracing path L and the axes V1, V2, V3. A method of calculating a coordinate value of the correcting point P of the measuring point S2 will be described.

First, with respect to the measuring point S1, S2 and S3, the vector G passing through the middle point g and the measuring point S2 is determined from the coordinate data stored in the RAM 13 or the like as follows.

$$Xv = X2 - (X1 + X3)/2 \tag{1}$$

$$Yv = Y2 - (Y1 + Y3)/2 \tag{2}$$

$$Zv = Z2 - (Z1 + Z3)/2 \tag{3}$$

At this time, since a unit vector from the measuring point S2 to the correcting point P coincides with a unit vector of the vector G, the following equation (4) is established.

$$(X - X2)/Xv = (Y - Y2)/Yv = (Z - Z2)/Zv = t \text{ (t: constant)} \tag{4}$$

When the equation (4) is rearranged with respect to X, Y and Z, the following equations can be obtained.

$$X = t \cdot Xv + X2 \tag{5}$$

$$Y = t \cdot Yv + Y2 \tag{6}$$

$$Z = t \cdot Zv + Z2 \tag{7}$$

Further, since the correcting point P is located on the tracing plane at all times, and as shown in Figure 4, since the machine position m moving along the tracing path L is also located on the tracing plane, the following equation is established.

$$Y - Ym = tanD \cdot (X - Xm) \tag{8}$$

Thus, t is determined by substituting the equation (8) for the equations (5) and (6) as follows.

$$(t \cdot Yv + Y2) - Ym = tanD \cdot ((t \cdot Xv + X2) - Xm) \tag{9}$$

$$t \cdot Yv - tanD \cdot t \cdot Xv = -Y2 + Ym + tanD \cdot (X2 - Xm)$$

$$t = (-Y2 + Ym + tanD \cdot (X2 - Xm))/(Yv - tanD \cdot Xv)$$

Then, the coordinate values of the correcting point P can be obtained by substituting the equation (9) for the equations (5), (6) and (7) as follows.

$$X = Xv \cdot (-Y2 + Ym + tanD \cdot (X2 - Xm))/(Yv - tanD \cdot Xv) + X2 \qquad (10)$$

$$Y = Yv \cdot (-Y2 + Ym + tanD \cdot (X2 - Xm))/(Yv - tanD \cdot Xv) + Y2 \qquad (11)$$

$$Z = Zv \cdot (-Y2 + Ym + tanD \cdot (X2 - Xm))/(Yv - tanD \cdot Xv) + Z2 \qquad (12)$$

Therefore, a tracing plane is regulated to the tracing plane containing the original tracing path by converting the coordinate values of the correcting point P to digitizing data and outputting the same. As a result, a trace made on a workpiece by machining is made smooth and an adverse affect such as oscillation and the like to a machine tool itself caused by a grinding operation or the like can be removed.

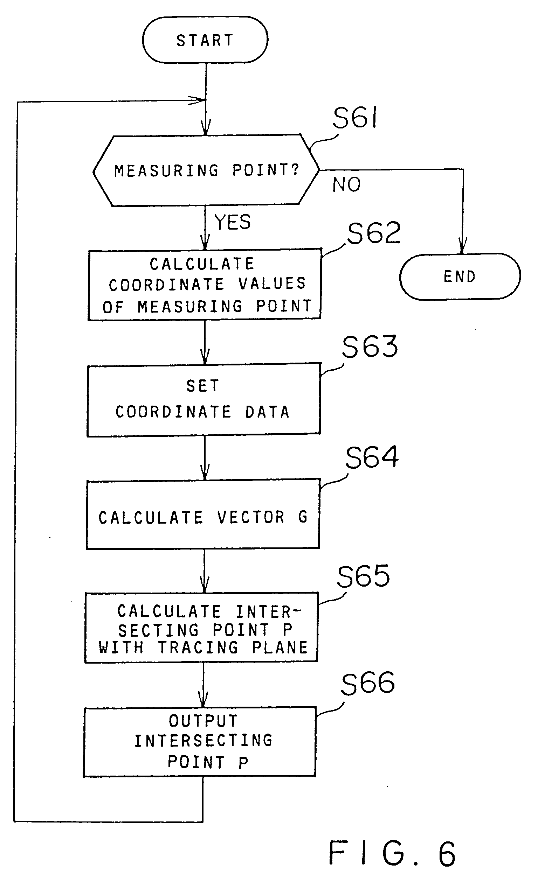

Figure 6 is a flowchart for executing an automatic measuring point correcting calculation processing in the digitizing control apparatus according to the present invention, wherein numerals prefixed with an "S" indicate the numbers of steps of the process.

[S61] It is determined whether a measuring point exists or not. That is, it is determined whether a new measuring point exists or not. If the new measuring point exists (YES), the process goes to step S62, and when the new measuring point does not exist (NO), this calculation processing is finished.

[S62] Coordinate values of the measuring point are calculated. More specifically, coordinate values of the present measuring point are determined by adding measuring displacements obtained by the distance sensor to the machine position (machine coordinate).

[S63] Coordinate data is set. More specifically, the coordinate determined at step 62 is used as the measuring point S3, the coordinate measured the last time is used as the measuring point S2 and the coordinate measured two times before is used as the measuring point S1.

[S64] The vector G is calculated. More specifically, the vector G is calculated by using the equations (1), (2) and (3).

[S65] An intersecting point with the tracing plane is calculated. More specifically, coordinate values of the correcting point P are calculated by using the equations (10), (11) and (12).

[S66] The coordinate values of the correcting point P are output as digitizing data. More specifically, the data of the intersecting point determined at step S65 is converted into digitizing data and output. Thereafter, the process returns to step S61 for processing a next measuring point.

In the above description, although the coordinates of the previously measured measuring points are used as the coordinate values set for the measuring points S1, S2, the intersecting points determined previously by the automatic measuring point correcting calculation processing may be used.

Further, although the coordinate data of each trace measuring point is corrected to digitizing data approximated by the new coordinate point on the tracing plane containing the tracing path of the sensor based on the measuring displacements of the sensor and the coordinate data of the commanded tracing path, a position of the Z-axis proportional to the moving distance of the sensor in the X - Y plane may be used a new coordinate point based on the measuring displacement in the Z-axis direction of the measuring displacements of the sensor.

More specifically, the correction means 102 can determine only the Z-axis data of the new coordinate point as described below. In Figure 5, it is assumed that the X- and Y-coodinates of the present measuring point S3 are the X- and Y-coordinates of the machine position m3. Further, a measuring point of the last time is represented by S2, a machine position at this time is represented by m2, and the Z-axis of a digitizing coordinate is represented by $Zd_2$ in the same way. Then, when it is assumed that a distance between the measuring points S3 and S2 is represented by Ps and a distance between the machine positions m3 and m2 is represented by Pm with respect to the X - Y plane, a Z-coordinate $Zd_3$ of the present measuring point S3 is determined by the following equation.

$$Zd_3 = (Pm \times (Z3 - Z2)/Ps) + Zd_2$$

Note, although the reflected light amount type distance sensor is described as the optical type distance sensor in the above embodiment, the present invention may be also applied to a digitizing control apparatus using a triangulation type distance sensor in addition to the above.

As described above, according to the present invention, since digitizing data to be output is regulated to a tracing plane containing an originally set tracing path, even if a model surface is abruptly changed, a trace made on a workpiece by machining is made smooth and an adverse affect such as oscillation and the like to a machine tool itself caused by a grinding operation or the like can be removed. Further, digitizing data can be compressed by making use of the data of a tracing plane and thus an amount of wasteful data for trace machining can be reduced.

## Claims

1. A digitizing control apparatus (1) for outputting digitized data of a model shape (7) from displacement measured from a reference point by a sensor (5a,5b) following a tracing path and tracing the three-dimensional model surface, comprising:

   calculation means (101) for calculating coordinate data of a digitized model surface by adding coordinate data commanding the tracing path on said model surface to the measured displacements at trace measuring points of said sensor; and characterised by:

   correction means (102) for correcting the coordinate data of said respective trace measuring points to digitizing data approximated by a new coordinate point on the tracing plane containing said tracing path, said correction means using a point where a vector connecting the center of gravity of said trace measuring point and the measuring points located in front of and behind said measuring point to said trace measuring point intersects the tracing plane containing said tracing path as a new coordinate point.

## Patentansprüche

1. Digitalisierendes Steuergerät (1) zur Ausgabe digitalisierter Daten eines Modells (7) durch Messen der Entfernung eines Referenzpunktes mit einem Geber (5a,5b), der einer Abtastbahn folgt und die dreidimensionale Modelloberfläche abtastet, mit

   einem Rechner (101) zum Berechnen von Koordinatendaten einer digitalisierten Modelloberfläche durch Hinzuaddieren von die Abtastbahn auf der Modelloberfläche bestimmenden Koordinatendaten zu den gemessenen Entfernungen an Abtastmeßpunkten des Gebers, und gekennzeichnet durch:

   Korrekturmittel (102) zum Korrigieren der Koordinatendaten der jeweiligen Abtastmeßpunkte in digitale Daten, die von einem neuen Koordinatenpunkt in der Abtastebene angenähert sind, welche die Abtastbahn enthält, wobei die Korrekturmittel einen Punkt benutzen, an dem ein den Schwerpunkt des Abtastmeßpunktes und der vor und hinter dem Meßpunkt gelegenen Punkte mit dem Abtastmeßpunkt verbindender Vektor die Abtastebene schneidet, in der die Abtastbahn als ein neuer Koordinatenpunkt liegt.

## Revendications

1. Appareil de contrôle de numérisation (1), pour délivrer des données numérisées de la forme d'un modèle (7) à partir du déplacement mesuré depuis un point de référence par un détecteur (5a, 5b) suivant un parcours de traçage, et pour tracer la surface du modèle en trois dimensions, comprenant:

   un moyen de calcul (101) pour calculer des données de coordonnées d'une surface numérisée du modèle en ajoutant des données de coordonnées commandant le parcours de traçage sur ladite surface du modèle aux déplacements mesurés en des points de mesure du traçage par ledit détecteur; et caractérisé par:

   un moyen de correction (102) pour corriger les données de coordonnées desdits points respectifs de mesure du traçage en données de numérisation approchées par un nouveau point de coordonnées dans le plan de traçage contenant ledit parcours de traçage, ledit moyen de correction utilisant comme nouveau point de coordonnées un point où un vecteur reliant le centre de gravité dudit point de mesure du traçage et des points de mesure situés en avant et en arrière dudit point de mesure et ledit point de mesure du traçage intersecte le plan de traçage contenant ledit parcours de traçage.

COMMAND
COORDINATE DATA

MEASURING
DISPLACEMENTS

101

CALCULATION MEANS

COORDINATE
DATA OF
RESPECTIVE
MEASURING
POINTS

102

CORRECTION MEANS

DIGITIZING DATA

# FIG. 1

FIG. 2

EP 0 563 407 B1

V-AXIS

$\beta = 0$

DISTANCE SENSOR

5

$\theta$

SPOT SO

REFERENCE SAMPLE

7

31 TABLE

X

Z

F I G. 3

9

FIG.4

F I G. 5

START

S61

MEASURING POINT?

NO

YES

S62

CALCULATE
COORDINATE VALUES
OF MEASURING POINT

END

S63

SET
COORDINATE DATA

S64

CALCULATE VECTOR G

S65

CALCULATE INTER-
SECTING POINT P
WITH TRACING PLANE

S66

OUTPUT
INTERSECTING
POINT P

F I G. 6